(19) Europäisches Patentamt
European Patent Office
Office européen des brevets

(11) **EP 1 774 401 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(21) Anmeldenummer: 05769618.9

(22) Anmeldetag: **27.07.2005**

(51) Int Cl.:
***G03B 13/20*** (2006.01)  ***G02B 7/32*** (2006.01)
***G03B 19/18*** (2006.01)

(86) Internationale Anmeldenummer:
**PCT/DE2005/001328**

(87) Internationale Veröffentlichungsnummer:
**WO 2006/012859 (09.02.2006 Gazette 2006/06)**

(54) **VERFAHREN ZUM FOKUSSIEREN DES AUFNAHMEOBJEKTIVS EINER LAUFBILD- ODER VIDEOKAMERA**

METHOD FOR FOCUSSING THE SHOOTING LENS OF A MOTION-PICTURE OR VIDEO CAMERA

PROCEDE DE FOCALISATION DE L'OBJECTIF DE PRISE DE VUES D'UNE CAMERA CINEMA OU VIDEO

(84) Benannte Vertragsstaaten:
**AT DE GB**

(30) Priorität: **27.07.2004 DE 102004037296**

(43) Veröffentlichungstag der Anmeldung:
**18.04.2007 Patentblatt 2007/16**

(73) Patentinhaber: **ARNOLD & RICHTER CINE TECHNIK GMBH & CO. BETRIEBS KG**
**80799 München (DE)**

(72) Erfinder:
• **HAUBMANN, Michael, B.**
**A-1230 Wien (AT)**

• **BAUER, Fritz, Gabriel**
**A-3002 Purkersdorf (AT)**

(74) Vertreter: **Müller, Wolfram Hubertus et al Patentanwälte**
**Maikowski & Ninnemann**
**Postfach 15 09 20**
**10671 Berlin (DE)**

(56) Entgegenhaltungen:
CH-A- 500 504   DE-A1- 4 205 397
US-A- 4 574 314   US-A- 5 076 686
US-A- 5 096 289   US-A1- 2003 193 658

**Beschreibung**

Die Erfindung betrifft ein Verfahren und eine Vorrichtung zum Fokussieren des Aufnahmeobjektivs einer Laufbild- oder Videokamera gemäß dem Oberbegriff der Ansprüch1 und 11.

Zum Einstellen der Bildschärfe bzw. zum Fokussieren von Aufnahmebildem oder Aufnahmesequenzen, die über ein Aufnahmeobjektiv von einer Laufbildkamera aufgenommen werden, ist es bekannt, eine Schärfenzieheinrichtung mit dem Aufnahmeobjektiv zu verbinden, die zur Entlastung des Kameramanns von einem Bildschärfe- oder Kameraassistenten manuell bedient wird. Die Schärfenzieheinrichtung ist entweder mechanisch mit dem Objektivring zur Bildschärfeeinstellung des Aufnahmeobjektivs verbunden, oder eine in horizontaler oder vertikaler Anordnung am Aufnahmeobjektiv angeordnete, elektromotorisch betriebene Antriebseinheit überträgt zur Schärfeeinstellung entsprechend der EP 0 575 022 B1 über ein Zahnritzel ein Drehmoment auf die Außenverzahnung des Bildschärfe-Objektivringes.

Gleichzeitig kann bei der EP 0 942 305 A1 in Verbindung mit der Antriebseinheit zur Einstellung der Position des Bildschärfe-Objektivrings eine mit dem Objektivring gekoppelte Vorrichtung zur Ermittlung des Ist-Zustandes der Objektivringposition vorgesehen werden, die die tatsächliche Position des Objektivrings relativ zum Objektiv ermittelt und in ein Messausgangssignal umwandelt.

Die Ansteuerung der Antriebseinheit zur Bildschärfeeinstellung kann entsprechend der EP 0 574 105 A1 über ein Steuersystem erfolgen, das mehrere mit den Objektivringen des Aufnahmeobjektivs einer Laufbildkamera entsprechend der EP 0 575 022 B1 gekoppelte Motoreinheiten zur Zoom-, Fokus- und Blendeneinstellung, in die Positionsgeber integriert sind, und eine oder mehrere Handbedieneinheiten umfasst, mit denen sowohl Einstellwerte als auch Bereichsgrenzen analog und/oder elektronisch einstellbar sind. Die Motoreinheiten und die Handbedieneinheit sind über einen seriellen Steuer- und Datenbus miteinander verbunden.

Alternativ kann entsprechend der DE 196 29 484 A1 eine Verbindung zwischen den mit den Objektivringen des Aufnahmeobjektivs der Laufbildkamera gekoppelten Antriebseinheiten und Positionsgebern mit einer oder mehreren Handbedieneinheiten zur Zoom-, Bildschärfe- und Blendeneinstellung über eine drahtlose Steuerung und Überwachung von Kamerafunktionen und damit zur Bildschärfeeinstellung hergestellt werden, bei der eine kameraseitige Steuer- und Erfassungseinheit über Leitungsverbindungen mit einer Fokus-, Zoom- und Iris-Antriebseinheit verbunden ist und ein Funkmodern enthält, das Steuersignale zu einer Fernbedienungs-Kontrolleinheit überträgt und von dieser empfängt. Die bedienerseitige Kontrolleinheit weist zur Fokussierung bzw. Bildschärfeeinstellung ein Handrad auf, das mit einer Skala hinterlegt ist, auf der Bereichsgrenzen zur Bildschärfeeinstellung eingestellt werden können. Ein mit dem Handrad verbundenes Potentiometer gibt Absolutwerte als Sollwerte zur Einstellung der Bildschärfe am Aufnahmeobjektiv vor, die über die Funkübertragungsstrecke zur kameraseitigen Steuer und Erfassungseinheit übertragen werden, die die mit den Bildschärfe-Objektivringen verbundene Motor- oder Antriebseinheit zur Einstellung des Bildschärfe-Objektivrings auf die von der bedienerseitigen Kontrolleinheit vorgegebene Sollposition einstellt.

Bei den vorstehend genannten Verfahren und Vorrichtungen erfolgt die Fokussierung bzw. Entfernungseinstellung des Aufnahmeobjektivs manuell durch die Vorgabe eines entsprechenden Entfernungs-Sollwertes, der entweder mittels eines Maßbandes vermessen oder beispielsweise anhand von vor der Aufnahme vermessenen Markierungspunkten geschätzt wird.

Da eine manuelle Fokussierung eines Aufnahmeobjektivs fehleranfällig und in speziellen Aufnahmesituationen, wie beispielsweise bei großen oder bei sehr geringen Distanzen und bei sehr schnellen Bildschärfeveränderungen, nur schwer durchführbar ist, ist aus der DE 42 05 397 A1 eine automatische Fokussierung eines Aufnahmeobjektivs bekannt, bei der eine Autofokussiereinrichtung mittels eines Ultraschall- oder Lasermessgerätes die Entfernung zwischen einem Aufnahmeobjekt und der Laufbildkamera erfasst und die zur Scharfstellung des Aufnahmebildes bzw. der Aufnahmesequenz erforderliche Bildschärfe am Aufnahmeobjektiv der Laufbildkamera einstellt.

Da sich aber bei der Aufnahme eines Motivs oder einer Szene nicht immer der gesamte Bildinhalt im Fokus befindet, tritt bei automatischen Fokussiereinrichtungen das Problem auf, die Entfernungsmesseinrichtung auf das scharf zu stellende Objekt innerhalb eines Aufnahmebildes auszurichten.

Aus der US 5 096 289 A ist eine Entfernungsmesseinrichtung für eine Stehbildkamera mit einer Fokussierungseinrichtung zum Senden und Empfangen eines auf ein Objekt gerichteten und von diesem reflektierten Messlichtstrahles bekannt. Um die Entfernung eines Objektes, das sich nicht im Sucherzentrum befindet, ohne Bewegung der Kamera zur Fokussierung des Objekts bei halb gedrücktem Auslöser zu ermitteln, sind Verstelleinrichtungen sowohl für eine das Sucherbild wiedergebende Positionserfassungseinrichtung mit einer Messbereichsmarkierung als auch für die Fokussierungseinrichtung vorgesehen, die in zueinander senkrechten X- und Y-Richtungen verstellbar sind. Mittels eines Trackballs kann die Positionserfassungseinrichtung mit der das Sucherbild wiedergebenden Messbereichsmarkierung bezüglich ihrer X- und Y-Koordinaten so verstellt werden, dass sich ein bestimmtes Objekt innerhalb der die Bildmitte repräsentierenden Messbereichsmarkierung befindet.

Befindet sich ein aufzunehmendes Objekt nicht in der Bildmitte, d.h. innerhalb der Messbereichsmarkierung, so wird die Kamera in die Position geschwenkt, in der sich das aufzunehmende Objekt innerhalb des Sucherbildes befindet. Anschließen wird der Trackball so rotiert, dass sich infolge der daraus resultierenden Verstellung der X- und Y-Koordinaten der Positionserfassungseinrichtung das Objekt innerhalb der Messbereichsmarkierung befindet. Die Verstellung der X- und Y-Koordinaten der Positionserfassungseinrichtung wird erfasst und an einen Mikrocomputer abgegeben, der daraus den erforderlichen Verstellwinkel für die Fokussierungseinrichtung berechnet und die Motoren für die Koordinatenverstellung der Fokussierungseinrichtung ansteuert.

Aus der US 4 574 314 A ist eine automatische Fokussiereinrichtung zum Steuern der Brennweite des Objektivs einer Fernsehkamera bekannt, die mit einem Monitor verbunden ist, der einen Bildschirm zur Darstellung eines großen Bildausschnitts enthält. Um ein einzelnes Objekt einer größeren, auf dem Bildschirm abgebildeten Szene scharf zu stellen, ist eine Einrichtung zur Erfassung der Augenbewegung eines Kameramanns vorgesehen, die ein der Augenstellung des Kameramanns entsprechendes Signal an die automatische Fokussiereinrichtung abgibt, die die Brennweite des Objektivs auf das zu fokussierende Objekt innerhalb der Szene einstellt. Eine zusätzliche Kalibrationseinrichtung dient zur Einstellung der automatischen Fokussiereinrichtung und der Einrichtung zur Erfassung der Augenbewegung auf den jeweiligen Kameramann.

Aus der US 5 076 686 A ist eine Laufbildkamera mit einem Kameraobjektiv mit variabler Brennweite und ein Autofokussystern bekannt, das getrennt von der Laufbildkamera angeordnet wird und ein Bereichssuchsystem, ein Winkelkodiersystem, eine Signalverarbeitungseinheit und eine Antriebseinrichtung zum Einstellen der Brennweite des Kameraobjektivs enthält. Das Bereichssuchsystem bestimmt den Abstand des Autofokussystems zur Laufbildkamera und zum aufzunehmenden Objekt und gibt zu den Abständen proportionale erste und zweite Signale an die Signalverarbeitungseinheit ab. Das Winkelkodiersystem misst den Winkel zwischen den vom Autofokussystem zur Laufbildkamera und zum aufzunehmenden Objekt führenden Geraden und gibt ein dem Winkel entsprechendes drittes Signal an die Signalverarbeitungseinheit ab, die aus den drei Signalen den Abstand zwischen der Laufbildkamera und dem aufzunehmenden Objekt ermittelt und ein diesem Abstand entsprechendes Signal an die Antriebseinrichtung zum Fokussieren des Kameraobjektivs abgibt.

Der vorliegenden Erfindung liegt daher die Aufgabenstellung zugrunde, ein Verfahren zum Fokussieren des Aufnahmeobjektivs einer Laufbild- oder Videokamera anzugeben, das ein exaktes Fokussieren des Aufnahmeobjektivs auf ein bewegtes oder ortsfestes Objekt in einem Aufnahmebild unter Gewährleistung einfacher Bedienbarkeit ermöglicht.

Diese Aufgabe wird erfindungsgemäß durch ein Verfahren mit den Merkmalen des Anspruchs 1 gelöst.

Die erfindungsgemäße Lösung gewährleistet ein leicht bedienbares, exaktes Fokussieren des Aufnahmeobjektivs einer Laufbild- oder Videokamera auf ein innerhalb eines Aufnahmebildes befindliches bewegtes oder ortsfestes Objekt.

Die erfindungsgemäße Lösung verwendet mindestens eine Entfernungsmesseinrichtung, die exakt auf das zu fokussierende Objekt innerhalb eines Aufnahmebildes ausgerichtet und gegebenenfalls nachgeführt wird. Die Ausrichtung und Nachführung des zu fokussierenden Objekts erfolgt mittels einer das Aufnahmebild wiedergebenden Anzeigeeinrichtung, auf der das zu fokussierende Objekt ausgewählt und die Entfernungsmesseinrichtung auf das ausgewählte Objekt ausgerichtet und nachgeführt wird. Die daraufhin von der Entfernungsmesseinrichtung durchgeführte Entfernungsmessung wird entweder als Entfernungsmesswert zur Anzeige gebracht, so dass anschließend eine manuelle Fokussierung unmittelbar, über eine Kabelverbindung oder durch Funkübertragung durchgeführt werden kann, oder als Sollwert zur automatischen Fokussierung des Aufnahmeobjektivs der Kamera durch eine entsprechende Einstellung des Aufnahmeobjektivs abgegeben.

Vorzugsweise wird die Entfernungsmesseinrichtung in Abhängigkeit von dem Bildwinkel eines Abbildungsobjektivs der Anzeigeeinrichtung und den Koordinaten der Abbildung des Objekts auf dem Monitor der Anzeigeeinrichtung in Bezug auf eine vorgegebene Ausrichtung der Entfernungsmesseinrichtung auf das Objekt ausgerichtet oder nachgeführt.

Wählt der Benutzer am Monitor der Anzeigeeinrichtung somit das zu fokussierende Objekt aus, so kann über die Angabe des Bildpunktes sowie den bekannten horizontalen und vertikalen Bildwinkeln des Abbildungs- oder des Aufnahmeobjektivs die Entfernungsmesseinrichtung auf das zu fokussierende Objekt ausgerichtet bzw. nachgeführt werden, um einen exakten Entfernungssollwert oder -messwert zu ermitteln. Die Angabe der Position des Bildpunktes erfolgt beispielsweise unter Verwendung eines Touch-Screen-Monitors, so dass durch die Berührung des Monitors die Objektkoordinaten vorgegeben werden, mittels einer PC-Maus, mit der eine Markierung zur Deckung mit der Abbildung des zu fokussierenden Objekts auf dem Monitor der Anzeigeeinrichtung oder eines PC's gebracht wird, durch eine elektronische Bildbearbeitung, eine digitale Bildaufbereitung oder dergleichen.

Dabei kann das Abbildungsobjektiv der Anzeigeeinrichtung mit dem Aufnahmeobjektiv der Laufbildkamera übereinstimmen, wenn bei einer Laufbildkamera das Videosignal der Abbildung auf dem Monitor aus einem Videosignal generiert wird, das aus dem Aufnahmestrahlengang ausgekoppelt wird, oder als zusätzliches, bezüglich der Brennweite und Abbildungsgröße mit dem Aufnahmeobjektiv übereinstimmendes Objektiv an der Kamera oder der Anzeigeeinrichtung angeordnet werden. Bei einer Videokamera wird dagegen das Abbildungsobjektiv üblicherweise aus dem Aufnahmeobjektiv gebildet.

Da die Entfernungsmesseinrichtung in einem bestimmten Abstand zur optischen Achse der Kamera angebracht werden muss, resultiert daraus ein Parallaxenfehler, der wegen der noch nicht bekannten Entfernung des Aufnahmeobjektivs bzw. der Bildebene der Kamera vom zu fokussierenden Objekt insbesondere bei geringen Abständen des zu fokussierenden Objekts von der Kamera zu Fehlmessungen führt, die zu einer ungenauen Fokussierung und damit zu einer eingeschränkten Anwendung des automatischen Messverfahrens führen.

Zur Lösung dieses Problems werden in weiterer Ausgestaltung des erfindungsgemäßen Verfahrens aus den Koordinaten der Abbildung des Objekts auf der Anzeigeeinrichtung die horizontale und vertikale Winkelabweichung des Objekts von der Kamera berechnet und als Sollwerte an die Steuereinrichtung einer die Entfernungsmesseinrichtung aufnehmenden Verstelleinrichtung zum Ausrichten oder Nachführen eines Messkopfes der Entfernungsmesseinrichtung abgegeben.

Durch diese Maßnahme wird der Abstand der Entfernungsmesseinrichtung von der optischen Achse der Kamera bzw. vom Aufnahmeobjektiv oder der Bildebene der Kamera berücksichtigt, so dass insbesondere im Nahbereich Parallaxenfehler ausgeschlossen werden können.

Vorzugsweise wird der an dem Aufnahmeobjektiv einzustellende Fokus aus der Entfernung der Aufnahmeebene der Kamera vom optischen Hauptpunkt des Aufnahmeobjektivs, Daten des Aufnahmeobjektivs wie Bildfeldwölbung, Korrekturfaktoren und dergleichen sowie der Entfernung des optischen Hauptpunktes des Aufnahmeobjektivs vom zu fokussierenden Objekt in der Weise bestimmt, dass der vom optischen Hauptpunkt des Aufnahmeobjektivs zum zu fokussierenden Objekt gerichtete Vektor und damit die Entfernung des Aufnahmeobjektivs zum zu fokussierenden Objekt aus dem Absolutwert der Addition eines von der Aufnahmeebene der Kamera zum Messpunkt der Entfernungsmesseinrichtung gerichteten Vektors mit einem von der Aufnahmeebene der Kamera zum optischen Hauptpunkt des Aufnahmeobjektivs gerichteten Vektor abzüglich eines vom Messpunkt der Entfernungsmesseinrichtung zum zu fokussierenden Objekt gerichteten Vektors nach der Gleichung

$$D = |\,\mathbf{D}\,| = |\,\mathbf{A} + \mathbf{B} - \mathbf{C}\,|$$

berechnet wird.

Wird die Entfernungsmesseinrichtung somit in vorbestimmter Position an der oder zur Kamera angeordnet, so wird durch den vorstehenden vektoriellen Ansatz der Abstand der Entfernungsmesseinrichtung von der optischen Achse der Kamera berücksichtigt und damit jedweder Parallaxenfehler ausgeschlossen.

Bei dieser Form der Bestimmung des Abstandes des zu fokussierenden Objekts von der optischen Achse der Kamera wird vorzugsweise die Länge des von der Aufnahmeebene der Kamera zum optischen Hauptpunkt des Aufnahmeobjektivs gerichteten Vektors aus den Daten und dem Fokussierungs-Istwert des Aufnahmeobjektivs bestimmt.

Weiterhin wird der vom Messpunkt der Entfernungsmesseinrichtung zum zu fokussierenden Objekt gerichtete Vektor aus der horizontalen und vertikalen Winkelabweichung des Objekts von der Kamera und dem Entfemungsmesswert der Entfernungsmesseinrichtung bestimmt.

Eine bevorzugte Methode zur Erfassung des zu fokussierenden Objekts mittels der Entfernungsmesseinrichtung ist dadurch gekennzeichnet, dass aus der horizontalen und vertikalen Winkelabweichung des Objekts von der Kamera und dem Bildwinkel des Abbildungsobjektivs der Anzeigeeinrichtung eine Gerade ermittelt wird, auf der sich das zu fokussierende Objekt befindet, und dass die Entfernungsmesseinrichtung auf einer von der Geraden und der Position des Messpunktes der Entfernungsmesseinrichtung aufgespannten Ebene verschwenkt wird und Entfernungsmessungen bis zum Auffinden des zu fokussierenden Objekts durchführt.

Da der Messpunkt der Entfernungsmesseinrichtung nicht zwingend in den-Schnittpunkten der Schwenkachsen der Verstelleinrichtung liegen muss und die Schwenkachsen sich nicht unbedingt schneiden müssen, besteht eine Alternative zur Erfassung des zu fokussierenden Objekts darin, zur Korrektur eine entsprechende Koordinatentransformation durchzuführen, bei der es auch dazu kommen kann, dass sich aus dem Messpunkt der Entfernungsmesseinrichtung und der Geraden keine einzelne Fläche ergibt, sondern eine Drehung dieser Ebene um die Gerade über den Abtastbereich erfolgt.

Eine vorteilhafte Weiterbildung des erfindungsgemäßen Verfahrens ist dadurch gekennzeichnet, dass mehrere Entfernungsmesseinrichtungen an unterschiedlichen Positionen angeordnet werden, deren Messwerte bezogen auf deren Entfernung von der Kamera ausgewertet werden.

Bei dieser Weiterbildung der erfindungsgemäßen Lösung werden durch Abschattung des Messstrahls der Entfernungsmesseinrichtung hervorgerufene Probleme umgangen, indem die Entfernungsmessung mindestens einer Entfernungsmesseinrichtung bei nicht abgeschattetem Messstrahl durchgeführt werden kann.

Alternativ oder zusätzlich kann mindestens eine Entfernungsmesseinrichtung verschiebbar auf einer Führungsvorrichtung angeordnet werden, so dass bei abgeschattetem Messstrahl durch eine Verlagerung des Ortes der Entfernungsmesseinrichtung bei gleichzeitiger Erfassung und Berücksichtigung des Abstandes der Entfernungsmesseinrichtung von der optischen Achse der Kamera eine korrekte Messung und Auswertung der Entfernungsmessung erfolgen kann.

Eine bei allen Aufnahmeobjektiven über die Veränderung der Entfernungseinstellung auftretende kleinere oder größere Änderung des Bildwinkels kann als bekannt angenommen und durch eine entsprechende Modellierung berücksichtigt werden, um Berechnungsfehler zu vermeiden. Dies kann beispielsweise durch einen Speicher mit Korrekturfaktoren erfolgen, die zusammen mit dem sich in Abhängigkeit von der Entfernungseinstellung ändernden Bildwinkeln des Aufnahmeobjektivs im Speicher abgelegt sind.

In gleicher Weise können auch Abbildungsfehler des Aufnahmeobjektivs wie beispielsweise kissen- oder tonnenförmige Verzeichnungen modelliert und als Korrekturfaktoren in dem Speicher abgelegt werden.

Eine Vorrichtung zur Durchführung des Verfahrens ist gekennzeichnet durch

- mindestens eine in definierter Position an der oder zur Kamera angeordnete Entfernungsmesseinrichtung,
- eine die Entfernungsmesseinrichtung aufnehmende und die Ausrichtung des Messstrahls der Entfernungsmesseinrichtung bestimmende Verstelleinrichtung und
- eine Steuereinheit mit

  - einer das Aufnahmebild der Kamera abbildenden Anzeigeeinrichtung und
  - einer Datenverarbeitungseinrichtung, die in Abhängigkeit von einem vom Benutzer definierten, zu fokussierenden Objekt ein Steuersignal zur Ausrichtung der Verstelleinrichtung auf das Objekt abgibt und aus dem von der Entfernungsmesseinrichtung ermittelten Abstand der Entfernungsmesseinrichtung von dem zu fokussierenden Objekt einen Sollwert zum automatischen Fokussieren des Aufnahmeobjektivs der Kamera abgibt und/ oder einen Entfernungsmesswert anzeigt.

Durch die erfindungsgemäße Vorrichtung wird eine automatische Fokussierung des Aufnahmeobjektivs einer Laufbild- oder Videokamera ermöglicht und damit eine fehleranfällige manuelle Fokuseinstellung vermieden, wobei sichergestellt ist, dass die Fokussierung auf ein scharf zu stellendes Objekt auch innerhalb eines mehrere Fokusbereiche umfassenden Bildinhalts ausgerichtet wird.

Die Anzeigeeinrichtung umfasst einen Monitor, auf dem ein Videobild der Videokamera oder eines aus dem Aufnahmestrahlengang der Laufbildkamera abgezweigten Videostrahlengangs abgebildet ist. In beiden Varianten wird auf dem Monitor der Bildinhalt des Aufnahmebildes der Kamera abgebildet, so dass gewährleistet ist, dass keine Abweichungen zwischen dem von der Fokussierungseinrichtung erfassten Bild und dem von der Kamera aufzunehmenden Bild auftreten.

Vorzugsweise ist der Monitor als Touch-Screen-Monitor ausgebildet, so dass eine einfache Bedienung gewährleistet ist, indem mit Berühren des scharf zu stellenden Objekts im Bildinhalt eine einfache Auswahl und Initiierung der Verstelleinrichtung zum Nachführen der Entfernungsmesseinrichtung sichergestellt ist.

Alternativ kann eine mittels Pfeiltasten oder einer PC-Maus bewegliche Markierung zur Deckung mit der Abbildung des zu fokussierenden Objekts auf dem Monitor der Anzeigeeinrichtung oder eines PC's gebracht werden oder durch eine elektronische Bildbearbeitung bzw. eine digitale Bildaufbereitung erfolgen.

Die Verstelleinrichtung kann entweder aus einem mittels elektromechanischer Antriebe um mindestens zwei Achsen, insbesondere um eine horizontale und vertikale Achse, verschwenkbaren Schwenkkopf oder aus einem optoelektrischen Strahlenablenksystem mit Kippspiegeln bzw. Galvanometern und/oder Prismen bestehen.

In einer bevorzugten Ausführungsform besteht die Entfernungsmesseinrichtung aus einem Laser-Entfernungsmesser hoher Messrate, vorzugsweise einer Messrate von größer oder gleich 200 Hz. Alternativ sind als Ultraschall- oder Infrarot-Entfernungsmesser ausgebildete Entfernungsmesseinrichtungen möglich.

Um zu vermeiden, dass durch Abschattung des Messstrahls der Entfernungsmesseinrichtung eine exakte Fokussierung nicht möglich ist, kann in einer weiterführenden Ausführungsform der Erfindung die Entfernungsmesseinrichtung in verstellbarer Positionierung zur Kamera angeordnet werden. Insbesondere kann die Entfernungsmesseinrichtung auf einer unmittelbar oder mittelbar mit der Kamera verbundenen Führungsvorrichtung, vorzugsweise einer Linearschiene, oder auf einem um das Aufnahmeobjektiv angeordneten Drehsystem positioniert werden. Weiterhin ist eine mehrteilige Ausführung des Messsystems mit abgesetztem Messkopf möglich.

Zusätzlich oder alternativ können zur Vermeidung einer Abschattung des Messstrahls mehrere Entfernungsmesseinrichtungen an unterschiedlichen Positionen in Bezug auf die Kamera angeordnet und mit einer gemeinsamen oder übergeordneten Steuereinheit verbunden werden.

Bei der Anordnung mehrer Entfernungsmesseinrichtungen werden die Messergebnisse der einzelnen Entfernungsmesseinrichtungen miteinander verglichen und zur Nachführung mit der Verstelleinrichtung bzw. Fokussierung des Aufnahmeobjektivs ausgewertet.

Das Aufnahmeobjektiv kann entweder aus einem Zoomobjektiv und daher mit variabler Brennweite und somit variablem Bildwinkel als auch als Objektiv mit fester Brennweite ausgeführt werden.

Zur Durchführung und Auswertung der Fokussierungsmessungen enthält die Steuereinheit einen Mikroprozessor, der mit einem Speicher zum Speichern von eingebbaren Abstandsdaten, in Abhängigkeit von dem verwendeten Aufnahmeobjektiv auswählbaren Korrekturdaten des Aufnahmeobjektivs und Parametern zur Koordinatentransformation verbunden ist.

Anhand eines in der Zeichnung dargestellten Ausführungsbeispieles soll der der Erfindung zugrundeliegende Gedanke näher erläutert werden. Es zeigen:

Fig. 1 - eine perspektivische Darstellung einer Laufbildkamera mit einer mit der Kamera über einen Schwenkkopf verbundenen Entfernungsmesseinrichtung;

Fig. 2a und 2b - zwei Ausführungsbeispiele für als Handbediengerät ausgebildete Anzeigeeinrichtungen;

Fig.3 - eine schematische Darstellung eines auf dem Monitor der Anzeigeeinrichtung abgebildeten Aufnahmebildes zur Definition der Position eines Messpunktes;

Fig.4 - eine grafische Darstellung der Definition einer durch das zu fokussierende Objekt gehenden Geraden und

Fig. 5 - eine grafische Darstellung zur Bestimmung der Entfernung eines zu fokussierenden Objektes vom optischen Hauptpunkt eines Aufnahmeobjektivs.

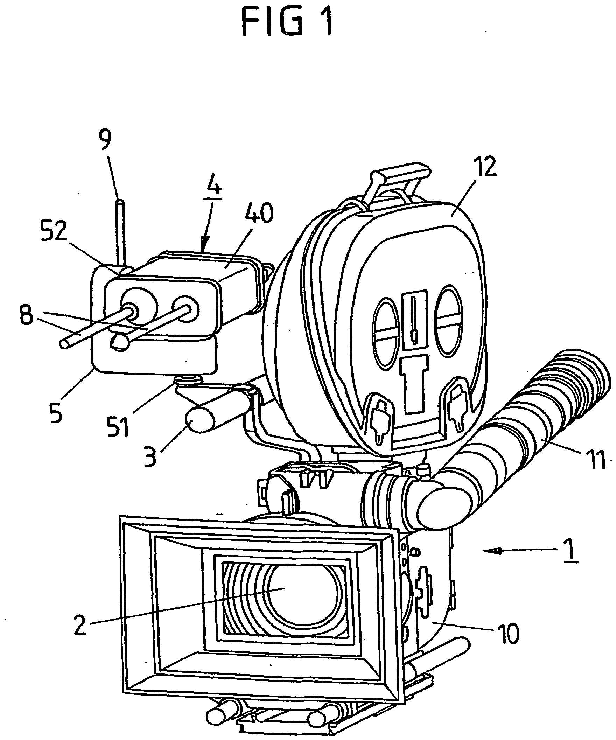

Die in Fig. 1 perspektivisch dargestellte Laufbildkamera 1 enthält einen Kamerakörper 10 mit darin angeordnetem Filmschaltwerk zum Transport eines Laufbildfilmes, eine Sucherlupe 11 sowie eine mit dem Kamerakörper 10 verbundenen Filmkassette 12. In der optischen Achse der Laufbildkamera 1 ist ein Aufnahmeobjektiv 2 angeordnet, das auf ein aufzunehmendes Objekt oder Motiv gerichtet wird.-Das Aufnahmeobjektiv 2 kann als Zoomobjektiv variabler Brennweite und dementsprechend variablem Bildwinkel oder als Objektiv mit fester Brennweite ausgeführt sein. Das beispielsweise über einen Bajonettanschluss mit einer Objektivöffnung des Kamerakörper 10 zu verbindende Aufnahmeobjektiv 2 kann über insgesamt drei Objektivringe verfügen, über die die Schärfe, die Blendenöffnung einer Irisblende und die Brennweite im Falle eines Zoomobjektivs einstellbar ist.

Die Einstellung des Aufnahmeobjektivs 2 erfolgt vorzugsweise über ein Steuerungssystem für ein Aufnahmeobjektiv einer Kamera mit einer oder mehreren Antriebseinheiten zur automatischen Einstellung von Positionen zumindest eines Objektivrings, wobei über die Antriebseinheiten ein vorbestimmbarer Soll-Zustand des oder der Objektivringe einstellbar ist. Eine mit dem oder den Objektivringen gekoppelte Vorrichtung zur Ermittlung des Ist-Zustandes der Objektivringposition ermittelt dabei die tatsächliche Position des oder der Objektivringe relativ zum Aufnahmeobjektiv und wandelt diese in ein Messausgangssignal um. Ein derartiges Steuerungssystem wird beispielsweise in der EP 0 942 395 A1 beschrieben.

Zusätzlich ist mit dem Kamerakörper 10 der Laufbildkamera 1 über eine Halterung und gegebenenfalls über einen Handgriff 3 ein Schwenkkopf 5 verbunden, der eine Entfernungsmesseinrichtung 4, beispielsweise in Form eines Laserentfernungsmessers, aufnimmt. Der Schwenkkopf 5 weist zwei Schwenkachsen 51, 52 auf, von denen die erste Schwenkachse 51 senkrecht zum Handgriff 3 angeordnet ist, so dass der Schwenkkopf 5 um diese vertikale Achse 51 in einer horizontalen Ebene verschwenkbar ist. Die zweite Schwenkachse 52 ist senkrecht zur ersten Schwenkachse 51 angeordnet und nimmt einen Messkopf 40 der Entfernungsmesseinrichtung 4 auf, so dass der Messkopf 40 um diese horizontale Achse verschwenkbar ist. In Verbindung mit der ersten Schwenkachse 51 ist somit gewährleistet, dass die Entfernungsmesseinrichtung um eine horizontale und eine vertikale Schwenkachse verstellt werden kann und in vorgegebener Positionierung mit der Laufbildkamera 1 verbunden ist.

Der Messkopf 40 der Entfernungsmesseinrichtung 4 gibt bei einer als Laserentfernungsmesser ausgebildeten Entfernungsmesseinrichtung 4 einen Laserstrahl als Messstrahl 8 ab und empfängt den von einem Objekt reflektierten Messstrahl 8, woraus die Entfernung des aufzunehmenden Objekts zur Laufbildkamera 1 bestimmt wird. Alternativ ist auch die Verstellung über Kippspiegel (Galvanometer) oder Prismen denkbar.

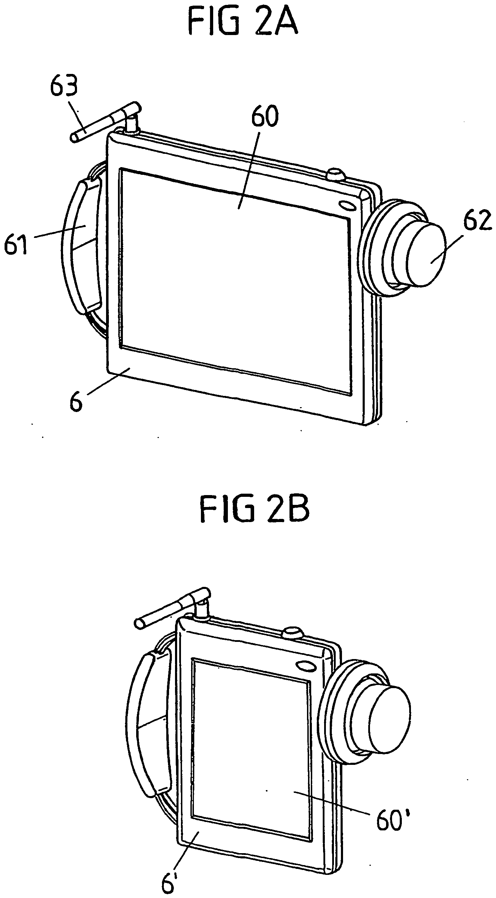

Eine mit dem Schwenkkopf 5 verbundene Antenne 9 dient zur Übertragung von Daten des Steuerungssystems für das Aufnahmeobjektiv 2 sowie des Entfernungsmesssystems und des Aufnahmebildes zu entfernt von der Laufbildkamera 1 angeordneten Handbediengeräten, an denen von unterschiedlichen Bedienungspersonen Aufnahmeparameter der Laufbildkamera 1 eingestellt und überwacht werden können. Zum Fokussieren der Laufbildkamera 1 auf ein bewegtes oder ortsfestes Objekt dient ein in Fig. 2a perspektivisch dargestelltes Handbediengerät, das aus einer Anzeigeeinrichtung 6 mit einem Monitor 60 besteht, der beispielsweise als Touch-Screen-Monitor ausgebildet ist. Die Anzeigeeinrichtung 6 weist einen Einstellknopf 62 sowie einen Prozessor auf, der über einen Signalverstärker mit einer Antenne 63 zur Funk-Fernübertragung von Daten zur Antenne 9 am Schwenkkopf 5 verbunden ist. Zur erleichterten Handhabung ist ein Handgriff 61 vorgesehen, der es einem Benutzer ermöglicht, mit einer Hand die Anzeigeeinrichtung 6 zu halten und mit der anderen Hand Einstellungen am Einstellknopf 62 vorzunehmen oder ein scharf zu stellendes Objekt durch Berühren des Monitors 60 an der Stelle des Objekts in dem auf dem Monitor 60 dargestellten Bildinhalt anzugeben.

Auf dem Monitor 60 wird ein Videobild dargestellt, das aus einem aus dem Aufnahmestrahlengang der Laufbildkamera 1 abgezweigten Videostrahlengang generiert wird, so dass das auf dem Monitor 60 abgebildete Videobild dem Aufnahmebild der Laufbildkamera 1 entspricht. Da sich nicht immer der gesamte auf dem Monitor 60 abgebildete Bildinhalt im Fokus des Aufnahmeobjektivs 2 befindet, kann durch Berühren des scharf zu stellenden Objekts auf dem Touch-Screen-Monitor 60 der am Aufnahmeobjektiv 2 eingestellte Fokus auf das scharf zu stellende Objekt ausgerichtet werden.

Alternativ zur Verwendung eines Touch-Screen-Monitors kann eine optische Einrichtung vorgesehen werden, mit der eine optische Kennung dem scharf zu stellenden Objekt überlagert wird.

Das in Fig. 2b dargestellte, als Anzeigeeinrichtung 6' ausgebildete Handbediengerät entspricht dem Handbediengerät gemäß Figur 2a mit anderer Ausrichtung und Dimensionierung des Monitors 60'.

Durch die Auswahl eines am Aufnahmeobjektiv 2 scharf einzustellenden Objekts am Monitor 60 bzw. 60' durch Angabe eines das Objekt bezeichnenden Bildpunktes kann die Entfernungsmesseinrichtung 4 gemäß Fig. 1 in Verbindung mit den bekannten Bildwinkeln des Aufnahmeobjektivs 2 nachgeführt werden, um mittels des vom Messkopf 40 abgegebenen und empfangenen Messstrahls 8 einen Entfernungssollwert zu ermitteln.

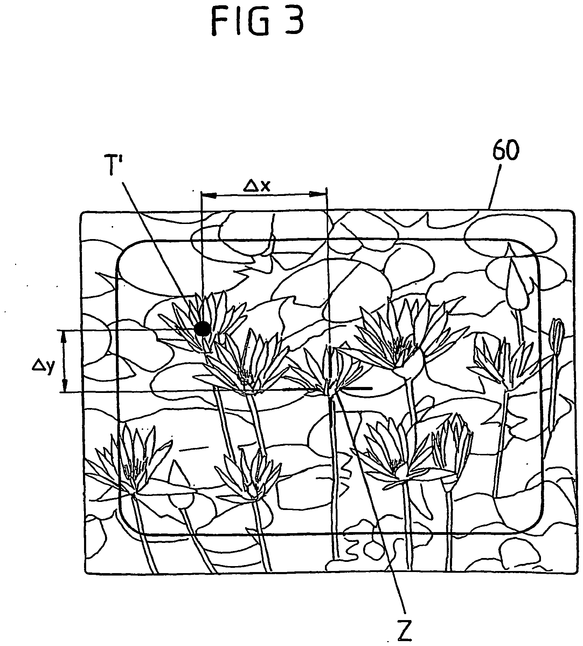

In Fig. 3 ist schematisch dargestellt, wie aus der Angabe eines Bildpunktes T' des zu fokussierenden Objekts in dem auf dem Monitor 60 abgebildeten Aufnahmebild der Laufbildkamera 1 gemäß Fig. 1 aus den Koordinaten $\Delta x$ und $\Delta y$ der Abweichung des Bildpunktes T' vom Zentrum Z des Bildinhalts eine Gerade g definiert wird, die durch die beiden aus den Koordinaten $\Delta x$ und $\Delta y$ ableitbaren Winkel $\alpha X$ und $\alpha Y$ festgelegt ist, in Verbindung mit den bekannten Bildwinkeln des Aufnahmeobjektivs 2 die Entfernungsmesseinrichtung 4 durch entsprechendes Schwenken des Schwenkkopfes 5 um die horizontale und vertikale Schwenkachse 51, 52 auf das zu fokussierende Objekt ausgerichtet wird, um durch Aktivieren des Messkopfes 40 den Entfernungssollwert zu ermitteln.

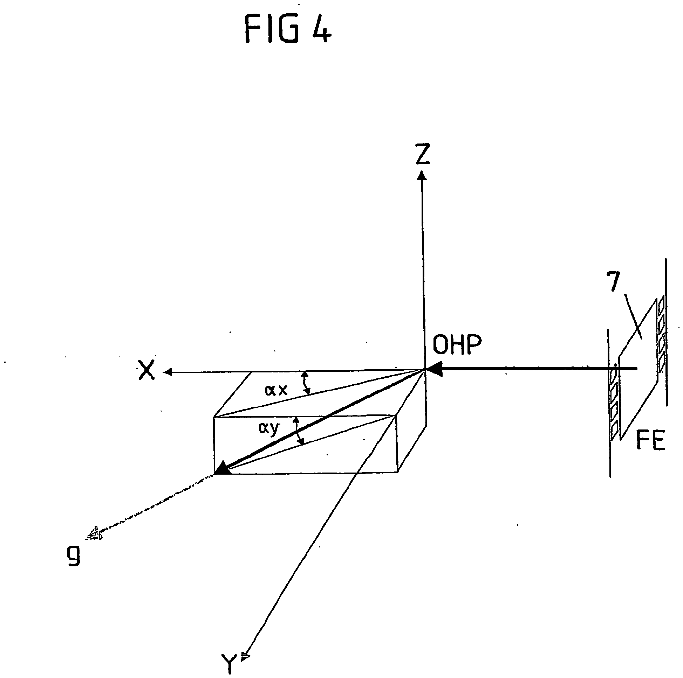

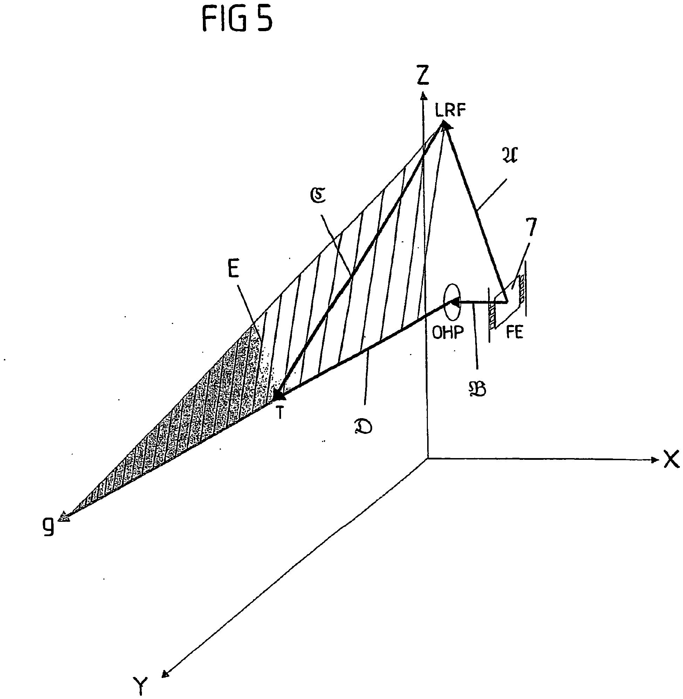

Da aber die Entfernungsmesseinrichtung 4 bzw. der Messkopf 40 der Entfernungsmesseinrichtung 4 gemäß Fig. 1 in einiger Entfernung zu der durch das Zentrum des Aufnahmeobjektivs 2 gegebenen optischen Achse der Laufbildkamera 1 angeordnet ist, resultiert aus der Entfernungsmessung der Entfernungsmesseinrichtung 4 ein Parallaxenfehler, der insbesondere im Nahbereich zu erheblichen Fehlmessungen führt und damit die Anwendung des Fokussierungsverfahrens einschränkt. Um einen derartigen Parallaxenfehler ausschließen zu können, wird das nachstehend an Hand der Fig. 4 und 5 erläuterte Verfahren eingesetzt.

Fig. 5 zeigt eine grafische Darstellung von Vektoren A, B, c, D in einem durch die Achsen X, Y und Z eines rechtwinkligen Koordinatensystems bestimmten dreidimensionalen Raum.

Da in diesem dreidimensionalen Raum die Entfernungsmesseinrichtung 4 gemäß Fig. 1 in vorgegebener Position an der Laufbildkamera 1 angebracht ist, ist der Abstand des Mess- oder Referenzpunktes LRF der Entfernungsmesseinrichtung 4 von der Filmebene FE des Laufbildfilmes 7 gemäß den Fig. 4 und 5 bekannt und kann durch einen Vektor A bestimmt werden.

In dem dreidimensionalen Raum befindet sich auch die Filmebene FE des Laufbildfilmes 7, der im Kamerakörper 10 gemäß Fig. 1 intermittierend an einem Bildfenster zur Filmbelichtung positioniert wird. Durch den bekannten Abstand des Bildfensters von dem Bajonettanschluss zur Befestigung des Aufnahmeobjektivs 2 sowie durch die optischen Daten des jeweils verwendeten Aufnahmeobjektivs 2 ist die Entfernung der Filmebene FE vom optischen Hauptpunkt OHP des Aufnahmeobjektivs 2 oder zumindest ein für die Entfernungsmessung ausreichender Näherungswert bekannt. Die Verbindung zwischen der Filmebene FE und dem optischen Hauptpunkt OHP wird dementsprechend durch einen Vektor B definiert, dessen Länge gleich dem bekannten Abstand der Filmebene FE vom optischen Hauptpunkt OHP des Aufnahmeobjektivs 2 ist, der aus den Daten des Aufnahmeobjektivs 2 und der momentan eingestellten Entfernung am Aufnahmeobjektiv, d. h. dem Istwert des Fokus, ermittelt werden kann. Diese Daten können insbesondere durch ein Steuerungssystem für das Aufnahmeobjektiv einer Kamera entsprechend der EP 0 942 305 A1 gewonnen werden.

Damit ist auch der Vektor B in der grafischen Darstellung gemäß Fig. 5, der von der Filmebene FE des Laufbildfilmes 7 zum optischen Hauptpunkt OHP des Aufnahmeobjektivs 2 gerichtet ist, eindeutig bestimmt.

Wie vorstehend bereits beschrieben, wird durch die Angabe des Abbildes des zu fokussierenden Objektes T auf dem Bild des Monitors 60 als Bildpunkt T' über den Bildwinkel des Abbildungs- bzw. Aufnahmeobjektivs 2 sowie durch die Abstände $\Delta x$ und $\Delta y$ des Bildpunktes T' vom Zentrum Z der Abbildung die Gerade g gemäß Fig. 4 ermittelt, auf der das zu fokussierende Objekt T liegen muss und die durch die beiden Winkel $\alpha x$ und $\alpha y$ bestimmt ist und aus den Werten $\Delta x$ und $\Delta y$ und dem Bildwinkel des Aufnahmeobjektivs 2 berechnet wird.

Durch die Gerade g und die bekannte Position der Entfernungsmesseinrichtung 4 in Bezug auf die optische Achse der Laufbildkamera 1 wird eine Ebene definiert, die in der grafischen Darstellung gemäß Fig. 5 schraffiert dargestellt ist. Der Messkopf 40 der Entfernungsmesseinrichtung 4 wird nun in dieser Ebene E verschwenkt und führt von einem vorgegebenen Nahpunkt, der beispielsweise durch die minimale, scharf zu stellende Entfernung bestimmt ist, Entfernungsmessungen in der Ebene E durch, die durch den vom Messpunkt LRF der Entfernungsmesseinrichtung 4 ausgehenden Vektor c gemäß Fig. 5 definiert ist.

Dazu wird die Entfernungsmesseinrichtung 4 mittels der ersten Achse 51 des Schwenkkopfes 5 auf die Ebene E ausgerichtet und durch Veränderung des Schwenkwinkels der zweiten Achse 52 des Schwenkkopfes 5 wird die Ebene E abgefahren. Sobald der durch die bekannten Schwenkwinkel des die Entfernungsmesseinrichtung 4 aufnehmenden Schwenkkopfes 5 und dem jeweiligen Messwert der Entfernungsmesseinrichtung 4 bestimmte Vektor c gemäß Fig. 5 einen Punkt auf der Geraden g trifft, ist das zu fokussierende Objekt T durch den Messstrahl 8 der Entfernungsmesseinrichtung 4 ermittelt.

Da somit die Vektoren A, B und C gemäß Fig. 5 bekannt sind, kann die Entfernung D des zu fokussierenden Objekts T vom optischen Hauptpunkt OHP aus dem Betrag der Vektoren A, B, C entsprechend der Gleichung

$$D = |D| = |A + B - C|$$

ermittelt werden. Über die bekannten Daten des Aufnahmeobjektivs 2 wie Bildfeldwölbung, Korrekturfaktoren und dergleichen sowie die Entfernung des optischen Hauptpunktes OHP von der Filmebene FE des Laufbildfilmes 7 kann anschließend der am Aufnahmeobjektiv 2 einzustellende Fokus berechnet werden.

In einer bevorzugten Ausführungsform wird als Entfernungsmesseinrichtung ein Laser-entfernungsmesser mit hoher Messrate von größer oder gleich 200 Hz verwendet. Alternativ können auch andere Messverfahren wie Ultraschall- oder Infrarotmessungen eingesetzt werden.

**Bezugszeichenliste**

| | |
|---|---|
| 1 | Laufbildkamera |
| 2 | Aufnahmeobjektiv |
| 3 | Handgriff |
| 4 | Entfernungsmesseinrichtung |
| 40 | Messkopf |
| 5 | Schwenkkopf |
| 51,52 | Schwenkachsen |
| 6 | Anzeigeeinrichtung |
| 60, 60' | Monitor |
| 61 | Handgriff |
| 62 | Einstellknopf |
| 63 | Antenne |
| 7 | Laufbildfilm |
| 8 | Messstrahl |
| 9 | Antenne |
| 10 | Kamerakörper |
| 11 | Sucherlupe |
| 12 | Filmkassette |
| A, B, C, D | Vektoren |
| X,Y,Z | Achsen eines rechtwinkligen Koordinatensystems |
| T | zu fokussierendes Objekt |
| T' | Bildpunkt |
| FE | Filmebene |
| OHP | Optischer Hauptpunkt des Objektivs |
| LRF | Mess- oder Referenzpunkt der Entfernungsmesseinrichtung |
| g | Gerade durch den optischen Hauptpunkt |
| D | Entfernung des zu fokussierenden Objekts vom optischen Hauptpunkt |

**Patentansprüche**

1.  Verfahren zum Fokussieren des Aufnahmeobjektivs (2) einer Laufbild- oder Videokamera (1) auf ein bewegtes oder ortsfestes Objekt (T), das auf einem Monitor (60) einer Anzeigeeinrichtung (6, 6') abgebildet wird, mit einer Entfernungsmesseinrichtung (4), die in Abhängigkeit von dem Bildwinkel eines Abbildungsobjektivs der Anzeigeeinrichtung (6, 6') und den Koordinaten der Abbildung des Objekts (T) auf dem Monitor (60) der Anzeigeeinrichtung (6, 6') in Bezug auf eine vorgegebene Ausrichtung der Entfernungsmesseinrichtung (4) auf das Objekt (T) ausgerichtet oder nachgeführt wird,

**dadurch gekennzeichnet,**

**dass** aus den Koordinaten der Abbildung des Objekts (T) auf dem Monitor (60) die horizontalen und vertikalen Winkelabweichungen des Objekts (T) von der Kamera (1) berechnet werden, aus denen und dem Bildwinkel des Abbildungsobjektivs der Anzeigeeinrichtung (6, 6') eine Gerade (g) ermittelt wird, auf der sich das zu fokussierende Objekt (T) befindet, dass die Entfernungsmesseinrichtung (4) auf einer von der Geraden (g) und der Position des Messpunktes (LRF) der Entfernungsmesseinrichtung (4) aufgespannten Ebene verschwenkt wird und Entfernungsmessungen bis zum Auffinden des zu fokussierenden Objekts (T) durchführt und dass der an dem Aufnahmeobjektiv (2) einzustellende Fokus aus

- der Entfernung der Aufnahmeebene (FE) der Kamera (1) vom optischen Hauptpunkt (OHP) des Aufnahmeobjektivs (2),
- Daten des Aufnahmeobjektivs (2) wie Bildfeldwölbung, Korrekturfaktoren und dergleichen,
- der Entfernung des optischen Hauptpunktes (OHP) des Aufnahmeobjektivs (2) vom zu fokussierenden Objekt (T)

und die Entfernung des optischen Hauptpunktes (OHP) des Aufnahmeobjektivs (2) zum zu fokussierenden Objekt (T) aus der Gleichung

$$D = |\mathfrak{D}| = |\mathfrak{A} + \mathfrak{C} - \mathfrak{B}|$$

mit

- einem vom optischen Hauptpunkt (OHP) des Aufnahmeobjektivs (2) zum zu fokussierenden Objekt (T) gerichteten Vektor ($\mathfrak{D}$),
- einem von der Aufnahmeebene (FE) der Kamera (1) zum Messpunkt (LRF) der Entfernungsmesseinrichtung (4) gerichteten Vektor ($\mathfrak{A}$),
- einem von der Aufnahmeebene (FE) der Kamera (1) zum optischen Hauptpunkt (OHP) des Aufnahmeobjektivs (2) gerichteten Vektor ($\mathfrak{B}$) und
- einem vom Messpunkt (LRF) der Entfernungsmesseinrichtung (4) zum zu fokussierenden Objekt (T) gerichteten Vektor ($\mathfrak{C}$C)

bestimmt wird.

2. Verfahren nach Anspruch 1, **dadurch gekennzeichnet, dass** die aus den Koordinaten der Abbildung des Objekts (T) auf dem Monitor (60) berechneten horizontalen und vertikalen Winkelabweichungen des Objekts (T) von der Kamera (1) als Sollwerte an die Steuereinrichtung einer die Entfernungsmesseinrichtung (4) aufnehmenden Verstelleinrichtung (5) zum Ausrichten oder Nachführen eines Messkopfes (40) der Entfernungsmesseinrichtung (4) abgegeben werden.

3. Verfahren nach Anspruch 1 oder 2, **dadurch gekennzeichnet, dass** die Länge des von der Aufnahmeebene (FE) der Kamera (1) zum optischen Hauptpunkt (OHP) des Aufnahmeobjektivs (2) gerichteten Vektors (B) aus den Daten und dem Fokussierungs-Istwert des Aufnahmeobjektivs (2) bestimmt wird.

4. Verfahren nach mindestens einem der voranstehenden Ansprüche, **dadurch gekennzeichnet, dass** der vom Messpunkt (LRF) der Entfernungsmesseinrichtung (4) zum zu fokussierenden Objekt (T) gerichtete Vektor (C) aus der horizontalen und vertikalen Winkelabweichung des Objekts (T) von der Kamera (1) und dem Entfernungsmesswert der Entfernungsmesseinrichtung (4) bestimmt wird.

5. Verfahren nach mindestens einem der voranstehenden Ansprüche, **dadurch gekennzeichnet, dass** bei nicht im Schnittpunkt von Schwenkachsen der Verstelleinrichtung (5) angeordnetem Messpunkt der Entfernungsmesseinrichtung (4) und/oder sich nicht schneidenden Schwenkachsen der Verstelleinrichtung (5) eine Koordinatentransformation zur Korrektur durchgeführt wird.

6. Verfahren nach Anspruch 5, **dadurch gekennzeichnet, dass** der Abtastbereich zum Auffinden des Objekts (T) in einer Drehung der zwischen der Geraden (g) und der Position des Messpunktes (LRF) der Entfernungsmesseinrichtung (4) aufgespannteri Ebene um die Gerade (g) liegt.

7. Verfahren nach mindestens einem der voranstehenden Ansprüche, **dadurch gekennzeichnet, dass** mehrere Entfernungsmesseinrichtungen (4) an unterschiedlichen Positionen angeordnet werden, deren Messwerte bezogen auf deren Entfernung von der Kamera (1) ausgewertet werden.

8. Verfahren nach mindestens einem der voranstehenden Ansprüche, **dadurch gekennzeichnet, dass** mindestens eine Entfernungsmesseinrichtung (4) verschiebbar auf einer Führungsvorrichtung angeordnet wird.

9. Verfahren nach mindestens einem der voranstehenden Ansprüche, **dadurch gekennzeichnet, dass** zur Fokussierung des Aufnahmeobjektivs (2) auf das Objekt (T) die sich aus der Entfernungseinstellung ergebende Änderung des Bildwinkels berücksichtigt wird.

10. Verfahren nach mindestens einem der voranstehenden Ansprüche, **dadurch gekennzeichnet, dass** zur Fokussierung des Aufnahmeobjektivs (2) auf das Objekt (T) Abbildungsfehler des Aufnahmeobjektivs (2) wie kissen- oder tonnenförmige Verzeichnungen berücksichtigt werden.

11. Verfahren nach Anspruch 9 oder 10, **dadurch gekennzeichnet, dass** Korrekturwerte aus Modellberechnungen in die Entfernungsberechnung eingegeben werden.

12. Vorrichtung zum Fokussieren des Aufnahmeobjektivs (2) einer Laufbild- oder Videokamera (1) auf ein bewegtes oder ortsfestes Objekt (T), das auf einem Monitor (60) einer Anzeigeeinrichtung (6, 6') abgebildet wird, mit einer Entfernungsmesseinrichtung (4), die in Abhängigkeit von dem Bildwinkel eines Abbildungsobjektivs der Anzeigeeinrichtung (6, 6') und den Koordinaten der Abbildung des Objekts (T) auf dem Monitor (60) der Anzeigeeinrichtung (6, 6') in Bezug auf eine vorgegebene Ausrichtung der Entfernungsmesseinrichtung (4) auf das Objekt (T) ausgerichtet oder nachgeführt wird
**gekennzeichnet durch**

- mindestens eine in definierter Position an der oder zur Kamera (1) angeordnete Entfernungsmesseinrichtung (4),
- eine die Entfernungsmesseinrichtung (4) aufnehmende und die Ausrichtung des Messstrahls (8) der Entfernungsmesseinrichtung (4) bestimmende Verstelleinrichtung (5) und
- eine Steuereinheit mit

- einer das Aufnahmebild der Kamera (1) abbildenden Anzeigeeinrichtung (6, 6') und
- einer Datenverarbeitungseinrichtung, die in Abhängigkeit von einem vom Benutzer definierten, zu fokussierenden Objekt (T) ein Steuersignal zur Ausrichtung der Verstelleinrichtung (5) auf das Objekt (T) abgibt und aus dem von der Entfernungsmesseinrichtung (4) ermittelten Abstand der Entfernungsmesseinrichtung (4) von dem zu fokussierenden Objekt (T) einen Sollwert zum automatischen Fokussieren des Aufnahmeobjektivs (2) abgibt und/oder einen Entfernungsmesswert anzeigt, wobei der Sollwert zum automatischen Fokussieren des Aufnahmeobjektivs (2) oder der Entfernungsmesswert aus
- der Entfernung der Aufnahmeebene (FE) der Kamera (1) vom optischen Hauptpunkt (OHP) des Aufnahmeobjektivs (2),
- Daten des Aufnahmeobjektivs (2) wie Bildfeldwölbung, Korrekturfaktoren und dergleichen,
- der Entfernung des optischen Hauptpunktes (OHP) des Aufnahmeobjektivs (2) vom zu fokussierenden Objekt (T)

und die Entfernung des optischen Hauptpunktes (OHP) des Aufnahmeobjektivs (2) zum zu fokussierenden Objekt (T) aus der Gleichung

$$D = |\mathfrak{D}| = |\mathfrak{A} + \mathfrak{C} - \mathfrak{B}|$$

mit

- einem vom optischen Hauptpunkt (OHP) des Aufnahmeobjektivs (2) zum zu fokussierenden Objekt (T) gerichteten Vektor ($\mathfrak{D}$),
- einem von der Aufnahmeebene (FE) der Kamera (1) zum Messpunkt (LRF) der Entfernungsmesseinrichtung (4) gerichteten Vektor ($\mathfrak{A}$),
- einem von der Aufnahmeebene (FE) der Kamera (1) zum optischen Hauptpunkt (OHP) des Aufnahmeobjektivs (2) gerichteten Vektor ($\mathfrak{B}$) und
- einem vom Messpunkt (LRF) der Entfernungsmesseinrichtung (4) zum zu fokussierenden Objekt (T) gerichteten Vektor ($\mathfrak{C}$)

bestimmt wird.

**13.** Vorrichtung nach Anspruch 12, **dadurch gekennzeichnet, dass** die Anzeigeeinrichtung (6, 6') einen Monitor (60) enthält, auf dem ein Videobild der Videokamera oder eines aus dem Aufnahmestrahlengang der Laufbildkamera (1) abgezweigten Videostrahlengangs abgebildet ist.

**14.** Vorrichtung nach Anspruch 13, **dadurch gekennzeichnet, dass** der Monitor (60) als Touch-Screen-Monitor ausgebildet ist.

**15.** Vorrichtung nach Anspruch 13, **dadurch gekennzeichnet, dass** die Anzeigeeinrichtung (6, 6') aus dem Monitor eines Personal Computers besteht, auf dem eine mittels Pfeiltasten oder einer PC-Maus bewegliche Markierung bringbar ist.

**16.** Vorrichtung nach Anspruch 12 oder 13, **dadurch gekennzeichnet, dass** das zu fokussierende Objekt (T) mittels elektronischer Bildbearbeitung oder digitaler Bildaufbereitung bestimmbar ist.

**17.** Vorrichtung nach mindestens einem der voranstehenden Ansprüche 12 bis 16, **dadurch gekennzeichnet, dass** das Abbildungsobjektiv der Anzeigeeinrichtung (6, 6') mit dem Aufnahmeobjektiv (2) einer Laufbildkamera (1) übereinstimmt, bei der ein Videosignal der Abbildung auf dem Monitor (60) aus einem Videosignal generiert wird, das aus dem Aufnahmestrahlengang ausgekoppelt wird.

**18.** Vorrichtung nach mindestens einem der voranstehenden Ansprüche 12 bis 16, **dadurch gekennzeichnet, dass** das Abbildungsobjektiv der Anzeigeeinrichtung (6, 6') als zusätzliches, bezüglich der Brennweite und Abbildungsgröße mit dem Aufnahmeobjektiv (2) übereinstimmendes Objektiv an der Kamera (1) oder der Anzeigeeinrichtung (6, 6') angeordnet ist.

**19.** Vorrichtung nach mindestens einem der voranstehenden Ansprüche 12 bis 18 **dadurch gekennzeichnet, dass** die Verstelleinrichtung aus einem mittels elektromechanischer Antriebe um mindestens zwei Achsen verschwenkbaren Schwenkkopf (5) besteht.

**20.** Vorrichtung nach Anspruch 19, **dadurch gekennzeichnet, dass** der Schwenkkopf (5) zumindest um eine horizontale und vertikale Achse verschwenkbar ist.

**21.** Vorrichtung nach mindestens einem der voranstehenden Ansprüche 12 bis 18, **dadurch gekennzeichnet, dass** die Verstelleinrichtung (5) aus einem optoelektrischen Strahlenablenksystem mit Kippspiegeln bzw. Gaivanometem und/oder Prismen besteht.

**22.** Vorrichtung nach mindestens einem der voranstehenden Ansprüche 12 bis 21, **dadurch gekennzeichnet, dass** die Entfernungsmesseinrichtung (4) aus einem Laser-Entfernungsmesser hoher Messrate, vorzugsweise einer Messrate von größer der gleich 200 Hz besteht.

**23.** Vorrichtung nach mindestens einem der voranstehenden Ansprüche 12 bis 19, **dadurch gekennzeichnet, dass** die Entfernungsmesseinrichtung (4) aus einem Ultraschall- oder Infrarot-Entfernungsmesser besteht.

**24.** Vorrichtung nach mindestens einem der voranstehenden Ansprüche 12 bis 23, **dadurch gekennzeichnet, dass** die Entfernungsmesseinrichtung (4) in verstellbarer Positionierung zur Kamera (1) angeordnet ist.

**25.** Vorrichtung nach Anspruch 24, **dadurch gekennzeichnet, dass** die Entfernungsmesseinrichtung (4) auf einer unmittelbar oder mittelbar mit der Kamera (1) verbundenen Führungsvorrichtung, vorzugsweise einer Linearschiene, angeordnet ist.

26. Vorrichtung nach Anspruch 24, **dadurch gekennzeichnet, dass** die Entfernungsmesseinrichtung (4) auf einem um das Aufnahmeobjektiv (2) angeordneten Drehsystem angeordnet ist.

27. Vorrichtung nach mindestens einem der voranstehenden Ansprüche 12 bis 26, **dadurch gekennzeichnet, dass** der den Messstrahl (8) der Entfernungsmesseinrichtung (4) abgebende und empfangende Messkopf (40) der Entfernungsmesseinrichtung (4) von der Entfernungsmesseinrichtung (4) getrennt positionierbar ist.

28. Vorrichtung nach mindestens einem der voranstehenden Ansprüche 12 bis 27, **dadurch gekennzeichnet, dass** mehrere Entfernungsmesseinrichtungen (4) an unterschiedlichen Positionen in Bezug auf die Kamera (1) angeordnet und mit einer gemeinsamen oder übergeordneten Steuereinheit verbunden sind.

29. Vorrichtung nach mindestens einem der voranstehenden Ansprüche 12 bis 26, **dadurch gekennzeichnet, dass** das Aufnahmeobjektiv (2) aus einem Zoomobjektiv mit variabler Brennweite und variablem Bildwinkel besteht.

30. Vorrichtung nach mindestens einem der voranstehenden Ansprüche 12 bis 28, **dadurch gekennzeichnet, dass** das Aufnahmeobjektiv (2) aus einem Objektiv mit fester Brennweite besteht.

31. Vorrichtung nach mindestens einem der voranstehenden Ansprüche 12 bis 28, **dadurch gekennzeichnet, dass** die Steuereinheit einen Mikroprozessor enthält, der mit einem Speicher zum Speichern von eingebbaren Abstandsdaten, in Abhängigkeit von dem verwendeten Aufnahmeobjektiv auswählbaren Korrekturdaten des Aufnahmeobjektivs (2) und Parametern zur Koordinatentransformation verbunden ist.

**Claims**

1. A method for focusing the shooting lens (2) of a motion picture or video camera (1) onto a moving or stationary object (T) imaged on a display instrument (60) of a display instrument (6, 6') with a distance measurement instrument (4), which is aligned or tracked in relation to a predetermined alignment of the distance measurement instrument (4) at the object (T) as a function of the image angle of an imaging lens of the display instrument (6, 6') and the coordinates of the image of the object (T) on the monitor (60) of the display instrument (6, 6'),
**characterized in that**
the horizontal and vertical angle deviation of the object (T) from the camera (1) is calculated from the coordinates of the image of the object (T) on the monitor (60), wherein a straight line (g), on which the object (T) to be focused lies, is determined from the horizontal and vertical angle deviation of the object (T) from the camera (1) and the image angle of the imaging lens of the display instrument (6, 6'), **in that** the distance measurement instrument (4) is panned on a plane spanned by the straight line (g) and the position of the measurement point (LRF) of the distance measurement instrument (4) and distance measurements are carried out until the object (T) to be focused is found, and **in that** the focus to be adjusted on the shooting lens (2) is determined from

- the distance of the shooting plane (FE) of the camera (1) from the principal optical point (OHP) of the shooting lens (2),
- data of the shooting lens (2) such as image field curvature, correction factors and the like,
- the distance of the principal optical point (OHP) of the shooting lens (2) from the object (T) to be focused,

and the distance of the principal optical point (OHP) of the shooting lens (2) to the object (T) to be focused being from the equation

$$\mathbf{D} = |D| = |A+B-C|$$

with

- a vector (A) directed from the shooting plane (FE) of the camera (1) to the measurement point (LRF) of the distance measurement instrument (4),

- a vector (B) directed from the shooting plane (FE) of the camera (1) to the principal optical point (OHP) of the shooting lens (2) and
- a vector (C) directed from the measurement point (LRF) of the distance measurement instrument (4) to the object (T) to be focused.

2. The method as claimed in claim 1, **characterized in that** the horizontal and vertical angle deviation of the object (T) from the camera (1) calculated from the coordinates of the image of the object (T) on the monitor (60) of the display instrument (6, 6') delivered as setpoint values to the control instrument of an adjustment instrument (5) holding the distance measurement instrument (4) for aligning or tracking a measurement head (40) of the distance measurement instrument (4).

3. The method as claimed in claim 1 or 2, **characterized in that** the length of the vector (B) directed from the shooting plane (FE) of the camera (1) to the principal optical point (OHP) of the shooting lens (2) is determined from the data and the actual focusing value of the shooting lens (2).

4. The method as claimed in at least one of the preceding claims, **characterized in that** the vector (C) directed from the measurement point (LRF) of the distance measurement instrument (4) to the object (T) to be focused is determined from the horizontal and vertical angle deviation of the object (T) from the camera (1) and the distance measurement value of the distance measurement instrument (4).

5. The method as claimed in at least one of the preceding claims, **characterized in that** a coordinate transformation for correction is carried out in the event that the measurement point of the distance measurement instrument (4) is not arranged at the intersection point of panning axes of the adjustment instrument (5) and/or panning axes of the adjustment instrument (5) do not intersect.

6. The method as claimed in claim 5, **characterized in that** the sampling distance for finding the object (T) lies in a rotation of the plane spanned between the straight line (g) and the position of the measurement point (LRF) of the distance measurement instrument (4) around the straight line (g).

7. The method as claimed in at least one of the preceding claims, **characterized in that** a plurality of distance measurement instruments (4) are arranged at different positions, the measurement values of which are evaluated in relation to their distance from the camera (1).

8. The method as claimed in at least one of the preceding claims, **characterized in that** at least one distance measurement instrument (4) is arranged displaceably on a guide device.

9. The method as claimed in at least one of the preceding claims, **characterized in that** the change of the image angle resulting from the distance setting is taken into account for focusing the shooting lens (2) onto the object (T).

10. The method as claimed in at least one of the preceding claims, **characterized in that** imaging errors of the shooting lens (2) such as cushion- or drum-shaped distortions are taken into account for focusing the shooting lens (2) onto the object (T).

11. The method as claimed in claim 9 or 10, **characterized in that** correction values from model calculations are entered into the distance calculation.

12. A device for focusing the shooting lens (2) of a motion picture or video camera (1) onto a moving or stationary object (T) imaged on a display instrument (60) with a distance measurement instrument (4), which is aligned or tracked in relation to a predetermined alignment of the distance measurement instrument (4) at the object (T) as a function of the image angle of an imaging lens of the display instrument (6, 6') and the coordinates of the image of the object (T) on the monitor (60) of the display instrument (6, 6'),
**characterized by**

- at least one distance measurement instrument (4) arranged at a defined position on or with respect to the camera (1),
- an adjustment instrument (5) holding the distance measurement instrument (4) and determining the alignment of the measurement beam (8) of the distance measurement instrument (4) and
- a control unit having

- a display instrument (6, 6') imaging the shooting image of the camera (1) and
- a data-processing instrument which, as a function of a user-defined object (T) to be focused, delivers a control signal for aligning the adjustment instrument (5) at the object (T) and delivers a setpoint value for automatically focusing of the shooting lens (2) and/or displays a distance measurement value from the distance, determined by the distance measurement instrument (4), of the distance measurement instrument (4) from the object (T) to be focused, wherein the setpoint value for automatically focusing of the shooting lens (2) or the distance measurement value is determined from
- the distance of the shooting plane (FE) of the camera (1) from the principal optical point (OHP) of the shooting lens (2),
- data of the shooting lens (2) such as image field curvature, correction factors and the like,
- the distance of the principal optical point (OHP) of the shooting lens (2) from the object (T) to be focused,

and the distance of the principal optical point (OHP) of the shooting lens (2) to the object (T) to be focused being from the equation

$$\mathbf{D} = |\mathbf{D}| = |\mathbf{A} + \mathbf{B} - \mathbf{C}|$$

with

- a vector (A) directed from the shooting plane (FE) of the camera (1) to the measurement point (LRF) of the distance measurement instrument (4),
- a vector (B) directed from the shooting plane (FE) of the camera (1) to the principal optical point (OHP) of the shooting lens (2) and
- a vector (C) directed from the measurement point (LRF) of the distance measurement instrument (4) to the object (T) to be focused.

13. The device as claimed in claim 12, **characterized in that** the display instrument (6, 6') contains a monitor (60) on which a video image of the video camera or a video beam path split from the shooting beam path of the motion picture camera (1) is imaged.

14. The device as claimed in claim 13, **characterized in that** the monitor (60) is designed as a touch-screen monitor.

15. The device as claimed in claim 13, **characterized in that** the display instrument (6, 6') consists of the monitor of a personal computer, on which a marking movable by means of arrow keys or a PC mouse can be applied.

16. The device as claimed in claim 12 or 13, **characterized in that** the object (T) to be focused can be determined by means of electronic image processing or digital image processing.

17. The device as claimed in at least one of the preceding claims 12 to 16, **characterized in that** the imaging lens of the display instrument (6, 6') coincides with the shooting lens (2) of a motion picture camera (1) in which a video signal of the image on the monitor (60) is generated from a video signal which is extracted from the shooting beam path.

18. The device as claimed in at least one of the preceding claims 12 to 16, **characterized in that** the imaging lens of the display instrument (6, 6') is arranged on the camera (1) or the display instrument (6, 6') as an additional lens coinciding with the shooting lens (2) in respect of the focal length and imaging size.

19. The device as claimed in at least one of the preceding claims 12 to 18, **characterized in that** the adjustment instrument consists of a panning head (5) which can be panned about at least two axes by means of electromechanical drives.

20. The device as claimed in claim 19, **characterized in that** the panning head (5) can be panned at least about a horizontal and a vertical axis.

21. The device as claimed in at least one of the preceding claims 12 to 18, **characterized in that** the adjustment instrument (5) consists of an optoelectrical beam deflection system with tilting mirrors or galvanometers and/or prisms.

**22.** The device as claimed in at least one of the preceding claims 12 to 21, **characterized in that** the distance measurement instrument (4) consists of a laser rangefinder with a high measurement rate, preferably a measurement rate of greater than or equal to 200 Hz.

**23.** The device as claimed in at least one of the preceding claims 12 to 19, **characterized in that** the distance measurement instrument (4) consists of an ultrasound or infrared rangefinder.

**24.** The device as claimed in at least one of the preceding claims 12 to 23, **characterized in that** the distance measurement instrument (4) is arranged in adjustable positioning with respect to the camera (1).

**25.** The device as claimed in claim 24, **characterized in that** the distance measurement instrument (4) is arranged on a guide device, preferably a linear rail, connected directly or indirectly to the camera (1).

**26.** The device as claimed in claim 24, **characterized in that** the distance measurement instrument (4) is arranged on a rotation system arranged around the shooting lens (2).

**27.** The device as claimed in at least one of the preceding claims 12 to 26, **characterized in that** the measurement head (40) of the distance measurement instrument (4), delivering and receiving the measurement beam (8) of the distance measurement instrument (4), is positionable separately from the distance measurement instrument (4).

**28.** The device as claimed in at least one of the preceding claims 12 to 27, **characterized in that** a plurality of distance measurement instruments (4) are arranged at different positions with respect to the camera (1) and are connected to a common or superordinate control unit.

**29.** The device as claimed in at least one of the preceding claims 12 to 26, **characterized in that** the shooting lens (2) consists of a zoom lens with a variable focal length and variable image angle.

**30.** The device as claimed in at least one of the preceding claims 12 to 28, **characterized in that** the shooting lens (2) consists of a lens with a fixed focal length.

**31.** The device as claimed in at least one of the preceding claims 12 to 28, **characterized in that** the control unit contains a microprocessor which is connected to a memory for storing enterable distance data, correction data of the shooting lens (2) which can be selected as a function of the shooting lens used, and parameters for coordinate transformation.

**Revendications**

**1.** Procédé de focalisation de l'objectif de prise de vues (2) d'une caméra cinéma ou vidéo (1) sur un objet mobile ou immobile (T) représenté sur un écran (60) d'un dispositif d'affichage (6, 6'), avec un dispositif de mesure de la distance (4) orienté sur l'objet (T) ou asservi par rapport à une orientation prédéfinie du dispositif de mesure de la distance (4), en fonction de l'angle de vue d'un objectif de reproduction du dispositif d'affichage (6, 6') et des coordonnées de la reproduction de l'objet (T) sur l'écran (60) du dispositif d'affichage (6, 6'),
**caractérisé
en ce qu'**à partir des coordonées de la reproduction de l'objet (T) sur l'écran (60), on calcule les écarts angulaires verticaux et horizontaux de l'objet (T) par rapport à la caméra (1) ce qui permet, avec l'angle de vue de l'objectif de reproduction du dispositif d'affichage (6, 6'), de déterminer une droite (g) sur laquelle se trouve l'objet (T) à focaliser, **en ce qu'**on bascule le dispositif de mesure de la distance (4) sur un plan défini par la droite (g) et la position du point de mesure (LRF) du dispositif de mesure de la distance (4) et on effectue des mesures de distances jusqu'à ce qu'on trouve l'objet (T) à focaliser, et en ce qu'on détermine la focalisation à régler sur l'objectif de prise de vues (2) à partir

- de la distance du plan de prise de vues (FE) de la caméra (1) au point optique central (OHP) de l'objectif de prise de vues (2),
- des données de l'objectif de prise de vues (2) comme la convexité du champ de l'image, des facteurs de correction et similaires,
- de la distance du point optique central (OHP) de l'objectif de prise de vues (2) à l'objet (T) à focaliser

et la distance du point optique central (OHP) de l'objectif de prise de vues (2) à l'objet (T) à focaliser à partir de

l'équation

$$D = |\mathfrak{D}| = |\mathfrak{A} + \mathfrak{C} - \mathfrak{B}|$$

avec

- un vecteur ( $\mathfrak{D}$ ) dirigé du point optique central (OHP) de l'objectif de prise de vues (2) à l'objet (T) à focaliser,

- un vecteur ( $\mathfrak{A}$ ) dirigé du plan de prise de vues (FE) de la caméra (1) au point de mesure (LRF) du dispositif de mesure de la distance (4),

- un vecteur ( $\mathfrak{B}$ ) dirigé du plan de prise de vues (FE) de la caméra (1) au point optique central (OHP) de l'objectif de prise de vues (2), et

- un vecteur ( $\mathfrak{C}$ ) dirigé du point de mesure (LRF) du dispositif de mesure de la distance (4) à l'objet (T) à focaliser.

2. Procédé selon la revendication 1, **caractérisé en ce que** les écarts angulaires horizontaux et verticaux de l'objet (T) par rapport à la caméra (1) calculés à partir des coordonnées de la représentation de l'objet (T) sur l'écran (60), sont envoyés comme valeurs de consigne au dispositif de commande d'un dispositif de réglage (5) logé dans le dispositif de mesure de la distance (4) pour orienter ou pointer une tête de mesure (40) du dispositif de mesure de la distance (4).

3. Procédé selon la revendication 1 ou 2, **caractérisé en ce que** la longueur du vecteur (B) dirigé du plan de prise de vues (FE) de la caméra (1) au point optique central (OHP) de l'objectif de prise de vues (2), est déterminée à partir des données et de la valeur vraie de focalisation de l'objectif de prise de vues (2).

4. Procédé selon une au moins des revendications précédentes, **caractérisé en ce que** le vecteur (C) dirigé du point de mesure (LRF) du dispositif de mesure de la distance (4) à l'objet (T) à focaliser, est déterminé à partir de l'écart angulaire vertical et horizontal de l'objet (T) par rapport à la caméra (1) et de la valeur de mesure de la distance du dispositif de mesure de la distance (4).

5. Procédé selon une au moins des revendications précédentes, **caractérisé en ce que** pour la correction, on effectue une transformation des coordonnées lorsque le point de mesure du dispositif de mesure de la distance (4) n'est pas disposé au point d'intersection des axes de basculement du dispositif de réglage (5) et/ou lorsque les axes de basculement du dispositif de réglage (5) ne se coupent pas.

6. Procédé selon la revendication 5, **caractérisé en ce que** la plage d'exploration pour trouver l'objet (T) se situe dans une rotation autour de la droite (g) du plan défini entre la droite (g) et la position du point de mesure (LRF) du dispositif de mesure de la distance (4).

7. Procédé selon une au moins des revendications précédentes, **caractérisé en ce qu'**on dispose plusieurs dispositifs de mesure de la distance (4) à différentes positions dont les valeurs de mesure sont exploitées en fonction de leur distance à la caméra (1).

8. Procédé selon une au moins des revendications précédentes, **caractérisé en ce qu'**on dispose au moins un dispositif de mesure de la distance (4) de manière coulissante sur un mécanisme de guidage.

9. Procédé selon une au moins des revendications précédentes, **caractérisé en ce que** pour la focalisation de l'objectif de prise de vues (2) sur l'objet (T), on tient compte de la modification de l'angle de vue résultant du réglage de la distance.

10. Procédé selon une au moins des revendications précédentes, **caractérisé en ce que** pour la focalisation de l'objectif de prise de vues (2) sur l'objet (T), on tient compte des défauts de reproduction de l'objectif de prise de vues (2) comme les distorsions en forme de coussin ou de tonneau.

**11.** Procédé selon la revendication 9 ou 10, **caractérisé en ce qu'**on injecte des valeurs de correction provenant de calculs de modèles dans le calcul de la distance.

**12.** Dispositif de focalisation de l'objectif de prise de vues (2) d'une caméra cinéma ou vidéo (1) sur un objet mobile ou immobile (T) représenté sur un écran (60) d'un dispositif d'affichage (6, 6'), avec un dispositif de mesure de la distance (4) orienté sur l'objet (T) ou asservi par rapport à une orientation prédéfinie du dispositif de mesure de la distance (4), en fonction de l'angle de vue d'un objectif de reproduction du dispositif d'affichage (6, 6') et des coordonnées de la reproduction de l'objet (T) sur l'écran (60) du dispositif d'affichage (6, 6'), **caractérisé par**

- au moins un dispositif de mesure de la distance (4) disposé dans une position définie sur ou par rapport à la caméra (1),
- un dispositif de réglage (5) logeant le dispositif de mesure de la distance (4) et définissant l'orientation du rayon de mesure (8) du dispositif de mesure de la distance (4), et
une unité de commande avec
- un dispositif d'affichage (6, 6') représentant l'image de la prise de vues de la caméra (1), et
- un dispositif de traitement de données qui en fonction d'un objet (T) à focaliser défini par un utilisateur, fournit un signal de commande pour l'orientation du dispositif de réglage (5) en direction de l'objet (T) et qui à partir de la distance du dispositif de mesure de la distance (4) à l'objet à focaliser (T) déterminée par le dispositif de mesure de la distance (4), fournit une valeur de consigne pour la focalisation automatique de l'objectif de prise de vues (2) et/ou indique une valeur de mesure de la distance, la valeur de consigne pour la focalisation automatique de l'objectif de prise de vues (2) ou la valeur de mesure de la distance étant déterminées à partir
- de la distance du plan de prise de vues (FE) de la caméra (1) au point optique central (OHP) de l'objectif de prise de vues (2),
- des données de l'objectif de prise de vues (2) comme la convexité du champ de l'image, des facteurs de correction et similaires,
- de la distance du point optique central (OHP) de l'objectif de prise de vues (2) à l'objet (T) à focaliser
et la distance du point optique central (OHP) de l'objectif de prise de vues (2) à l'objet (T) à focaliser à partir de l'équation

$$D = |\mathcal{D}| = |\mathcal{A} + \mathcal{C} - \mathcal{B}|$$

avec

- un vecteur ($\mathcal{D}$) dirigé du point optique central (OHP) de l'objectif de prise de vues (2) à l'objet (T) à focaliser,

- un vecteur ($\mathcal{A}$) dirigé du plan de prise de vues (FE) de la caméra (1) au point de mesure (LRF) du dispositif de mesure de la distance (4),

- un vecteur ($\mathcal{B}$) dirigé du plan de prise de vues (FE) de la caméra (1) au point optique central (OHP) de l'objectif de prise de vues (2), et

- un vecteur ($\mathcal{C}$) dirigé du point de mesure (LRF) du dispositif de mesure de la distance (4) à l'objet (T) à focaliser.

**13.** Dispositif selon la revendication 12, **caractérisé en ce que** le dispositif d'affichage (6, 6') contient un écran (60) qui reproduit une image vidéo de la caméra vidéo ou un chemin de faisceau vidéo dérivé du chemin de faisceau de prise de vues de la caméra cinéma (1).

**14.** Dispositif selon la revendication 13, **caractérisé en ce que** l'écran (60) est développé sous la forme d'un écran tactile.

**15.** Dispositif selon la revendication 13, **caractérisé en ce que** le dispositif d'affichage (6, 6') est constitué par l'écran d'un ordinateur personnel sur lequel on peut afficher une marque mobile au moyen des touches à flèches directionnelles ou d'une souris d'ordinateur personnel.

**16.** Dispositif selon la revendication 12 ou 13, **caractérisé en ce que** l'objet à focaliser (T) peut être déterminé au moyen de traitement d'image électronique ou de traitement d'image numérique.

**17.** Dispositif selon une au moins des revendications précédentes 12 à 16, **caractérisé en ce que** l'objectif de reproduction du dispositif d'affichage (6, 6') correspond à l'objectif de prise de vues (2) d'une caméra cinéma (1) dans laquelle un signal vidéo de la reproduction sur l'écran (60) est généré à partir d'un signal vidéo dérivé du chemin de faisceau de prise de vues.

**18.** Dispositif selon une au moins des revendications précédentes 12 à 16, **caractérisé en ce que** l'objectif de reproduction du dispositif d'affichage (6, 6') est disposé comme accessoire sur la caméra (1) ou sur le dispositif d'affichage (6, 6') pour ce qui concerne la distance focale et la grandeur de reproduction avec l'objectif correspondant à l'objectif de prise de vues (2).

**19.** Dispositif selon une au moins des revendications précédentes 12 à 18, **caractérisé en ce que** le dispositif de réglage est constitué d'une tête pivotante (5) pouvant pivoter autour d'au moins deux axes au moyen de commandes électromécaniques.

**20.** Dispositif selon la revendication 19, **caractérisé en ce que** la tête pivotante (5) peut au moins pivoter autour d'un axe horizontal et d'un axe vertical.

**21.** Dispositif selon une au moins des revendications précédentes 12 à 18, **caractérisé en ce que** le dispositif de réglage (5) est constitué d'un système opto-électrique de déflexion de rayons avec des miroirs pivotants, respectivement des galvanomètres et/ou des prismes.

**22.** Dispositif selon une au moins des revendications précédentes 12 à 21, **caractérisé en ce que** le dispositif de mesure de la distance (4) est constitué d'un télémètre à laser à fréquence d'échantillonnage élevée, de préférence à fréquence d'échantillonnage supérieure ou égale à 200 Hz.

**23.** Dispositif selon une au moins des revendications précédentes 12 à 19, **caractérisé en ce que** le dispositif de mesure de la distance (4) est constitué d'un télémètre à ultrasons ou à infrarouge.

**24.** Dispositif selon une au moins des revendications précédentes 12 à 23, **caractérisé en ce que** le dispositif de mesure de la distance (4) est disposé sur un positionnement réglable par rapport à la caméra (1).

**25.** Dispositif selon la revendication 24, **caractérisé en ce que** le dispositif de mesure de la distance (4) est disposé sur un appareil de guidage, de préférence un rail linéaire, relié directement ou indirectement à la caméra (1).

**26.** Dispositif selon la revendication 24, **caractérisé en ce que** le dispositif de mesure de la distance (4) est disposé sur un système rotatif disposé autour de l'objectif de prise de vues (2).

**27.** Dispositif selon une au moins des revendications précédentes 12 à 26, **caractérisé en ce que** la tête de mesure (40) du dispositif de mesure de la distance (4) émettant et recevant le rayon de mesure (8) du dispositif de mesure de la distance (4) peut être positionné séparément du dispositif de mesure de la distance (4).

**28.** Dispositif selon une au moins des revendications précédentes 12 à 27, **caractérisé en ce que** plusieurs dispositifs de mesure de la distance (4) sont disposés à différentes positions par rapport à la caméra (1) et sont reliés à une unité de commande commune ou principale.

**29.** Dispositif selon une au moins des revendications précédentes 12 à 26, **caractérisé en ce que** l'objectif de prise de vues (2) est constitué par un objectif zoom à focale variable et à angle de vue variable.

**30.** Dispositif selon une au moins des revendications précédentes 12 à 28, **caractérisé en ce que** l'objectif de prise de vues (2) est constitué par un objectif à focale fixe.

**31.** Dispositif selon une au moins des revendications précédentes 12 à 28, **caractérisé en ce que** l'unité de commande contient un microprocesseur relié à une mémoire pour enregistrer des données d'espacement pouvant être chargées en fonction de l'objectif de prise de vues utilisé, des données de corrections sélectionnées de l'objectif de prise de vues (2) et des paramètres pour la transformation des coordonnées.

# FIG 1

# FIG 2A

# FIG 2B

# FIG 3

# FIG 4

## FIG 5

**IN DER BESCHREIBUNG AUFGEFÜHRTE DOKUMENTE**

**In der Beschreibung aufgeführte Patentdokumente**

- EP 0575022 B1
- EP 0942305 A1
- EP 0574105 A1
- DE 19629484 A1
- DE 4205397 A1
- US 5096289 A
- US 4574314 A
- US 5076686 A
- EP 0942395 A1